# EUROPEAN PATENT SPECIFICATION

(11) **EP 4 167 604 B1**
(45) Date of publication and mention of the grant of the patent: **02.04.2025**
(21) Application number: 22201040.7
(22) Date of filing: 12.10.2022
(51) Int. Cl.: H04W 76/40, H04W 4/06, H04W 80/02

(54) **METHODS AND APPARATUS TO SET INITIAL PDCP STATE VARIABLES FOR MULTICAST**
VERFAHREN UND VORRICHTUNG ZUR EINSTELLUNG VON ANFÄNGLICHEN PDCP-ZUSTANDSVARIABLEN FÜR MULTICAST
PROCÉDÉS ET APPAREIL POUR DÉFINIR DES VARIABLES INITIALES D'ÉTAT PDCP POUR MULTIDIFFUSION

(30) Priority: 14.10.2021 WO PCT/CN2021/123856; 16.09.2022 CN 202211132164
(43) Date of publication of application: 19.04.2023
(73) Proprietor: MediaTek Singapore Pte. Ltd., Singapore 138628 (SG)
(72) Inventor: ZHANG, Xiaonan, Beijing (CN); ZHANG, Yuanyuan, Beijing (CN); WANG, Xuelong, Beijing (CN)
(74) Representative: Hoefer & Partner Patentanwälte mbB

(56) References cited:
- CN-A- 111 901 766
- ZTE ET AL: "Miscellaneous L2 centric issues on NR MBS", vol. RAN WG2, no. electronic; 20210809 - 20210827, 6 August 2021 (2021-08-06), XP052034063, Retrieved from the Internet <URL:https://ftp.3gpp.org/tsg_ran/WG2_RL2/TSGR2_115-e/Docs/R2-2107338.zip R2-2107338 Miscellaneous L2 centric issues on NR MBS.doc> [retrieved on 20210806]
- MEDIATEK INC: "Summary of 8.1.2.3 L2 Centric Other", vol. RAN WG2, no. Online; 20210816 - 20210827, 14 August 2021 (2021-08-14), XP052043071, Retrieved from the Internet <URL:https://ftp.3gpp.org/tsg_ran/WG2_RL2/TSGR2_115-e/Inbox/R2-2109026.zip R2-2109026 Summary of [Pre115-e][002] [MBS] 8.1.2.3 L2 Centric Other.docx> [retrieved on 20210814]
- MEDIATEK INC: "Initialization of RLC and PDCP windows", vol. RAN WG2, no. Electronic; 20210816 - 20210827, 6 August 2021 (2021-08-06), XP052033900, Retrieved from the Internet <URL:https://ftp.3gpp.org/tsg_ran/WG2_RL2/TSGR2_115-e/Docs/R2-2107120.zip R2-2107120 Initialization of RLC and PDCP windows.docx> [retrieved on 20210806]

## Description

### TECHNICAL FIELD

The disclosed embodiments relate generally to wireless communication, and, more particularly, to set initial packet data convergence protocol (PDCP) state variables for multicast.

### BACKGROUND

With the exponential growth of wireless data services, the content delivery to large mobile user groups has grown rapidly. Various cellular systems, including both 4G/long term evolve (LTE) system and 5G/ new radio (NR) systems, may provide a multicast functionality, which allows user equipments (UEs) in the system to receive multicast services transported by the cellular system. A variety of applications may rely on communication over multicast transmission, such as live stream, video distribution, vehicle-to-everything (V2X) communication, public safety (PS) communication, file download, and so on. When UE establishes multicast radio bearer (MRB), hyper frame number (HFN) needs to be synchronized between the wireless network and the UE. It is also necessary to set initial value of packet data convergence protocol (PDCP) receiving window. In the legacy system, the initial values of the variables for transmit and receive operation at the PDCP layer are deterministic and usually starts from zero because data transmission/reception starts after UE is in the RRC CONNECTED state. In the NR multicast, the UE may join the multicast and broadcast service (MBS) session after the MBS session activation, which implies that the PDCP packets transmission over the air interface has been on-going for a while. Therefore, the UE cannot initialize the PDCP variables as usual for the MBS session. 3GPP Draft R2-2107338, 3GPP Draft R2-2109026, 3GPP Draft R2-2107120, and CN 111 901 766 A disclose corresponding background art.

Improvements and enhancements are required to initialize PDCP state variables for multicast services.

### SUMMARY

Apparatus and methods are provided for setting initial PDCP state variables for multicast services and are defined in the independent claims. The dependent claims define preferred embodiments thereof. In one novel aspect, the UE sets initial PDCP state variables for the MBS session based on configuration values received from the network. Preferably, the UE receives dedicated RRC signaling from the network, which contains initial HFN value and the SN of the next PDCP PDU to be transmitted. Preferably, the one or more configuration values are provided in RRC Reconfiguration message. Preferably, the one or more configuration values are provided in RRCResume, or RRCSetup message, according to different RRC states of UE. Preferably, the UE initializes the RX_DELIV value based on the configuration value of HFN and SN received from the wireless network. When receiving the one or more configuration values of initial PDCP state variables, UE sets HFN to initial HFN value and sets RX_DELIV to the COUNT value of next PDCP PDU to be transmitted by network. Preferably, the UE stores one or more PDCP packet data units (PDUs) in a reception buffer when the one or more PDCP PDUs are received before receiving one or more configuration values for PDCP state variables from the wireless network.

In another embodiment, the gNB receives a join request from a UE to join an active MBS session, wherein the MBS session is served with an MRB, and wherein the gNB and the UE has a unicast connection for feedback; sends one or more configuration values for PDCP state variables to the UE, wherein the PDCP state variables control PDCP transceiving for the MBS session; and receives feedback from the UE regarding reception information of the MBS session.

This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 is a schematic system diagram illustrating an exemplary wireless communication network where the UE initializes the PDCP state variables for multicast based on configurations received from the wireless network.
Figure 2 illustrates an exemplary NR wireless system with centralized upper layers of the NR radio interface stacks.
Figure 3 illustrates exemplary MRB configuration in accordance with embodiments of the current invention.
Figure 4 illustrates an exemplary protocol stack for a MRB configuration with PDCP-based retransmission.
Figure 5 illustrates an exemplary flow diagram of conditions for UE RRC states when MBS sessions are active in accordance with embodiments of the current invention.
Figure 6 illustrates an exemplary flow diagram of conditions for setting the PDCP state variables based on network information for multicast services in accordance with embodiments of the current invention.
Figure 7 illustrates an exemplary message diagram of setting the PDCP state variables based on the received network information for multicast services in accordance with embodiments of the current invention.
Figure 8 illustrates an exemplary diagram for setting the UE PDCP state variables indicated by the network in accordance with embodiments of the current invention.
Figure 9 illustrates an exemplary flow chart for the UE receiving one or more configuration values for UE PDCP state variables for an MBS session from the network and setting the PDCP state variables in accordance with embodiments of the current invention.
Figure 10 illustrates an exemplary flow chart for the base station sending one or more configuration values for UE PDCP state variables for an MBS session in accordance with embodiments of the current invention.

### DETAILED DESCRIPTION

Reference will now be made in detail to some embodiments of the invention, examples of which are illustrated in the accompanying drawings.

Aspects of the present disclosure provide methods and an apparatus for NR (new radio access technology, or 5G technology) or other radio access technologies. NR may support various wireless communication services, such as enhanced mobile broadband targeting wide bandwidth, millimeter wave targeting high carrier frequency, massive machine type communications targeting non-backward compatible MTC techniques, and/or mission critical targeting ultra-reliable low-latency communications. These services may include latency and reliability requirements. These services may also have different transmission time intervals (TTI) to meet respective quality of service (QoS) requirements. In addition, these services may co-exist in the same subframe. Several aspects of telecommunication systems will now be presented with reference to various apparatus and methods. These apparatus and methods will be described in the following detailed description and illustrated in the accompanying drawings by various blocks, components, circuits, processes, algorithms, etc., collectively referred to as "elements". These elements may be implemented using electronic hardware, computer software, or any combination thereof. Whether such elements are implemented as hardware or software depends upon the particular application and design constraints imposed on the overall system.

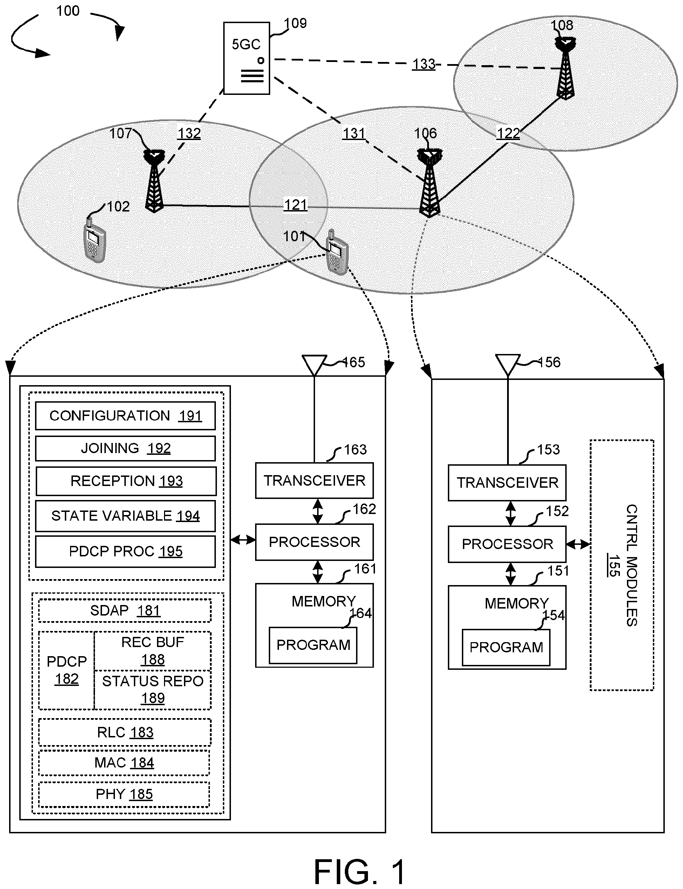

Figure 1 is a schematic system diagram illustrating an exemplary wireless communication network where the UE initializes the PDCP state variables for multicast based on configurations received from the wireless network. Wireless communication network 100 includes one or more fixed base infrastructure units forming a network distributed over a geographical region. The base unit may also be referred to as an access point, an access terminal, a base station, a Node-B, an eNode-B (eNB), a gNB, or by other terminology used in the art. As an example, base stations serve a number of mobile stations within a serving area, for example, a cell, or within a cell sector. In some systems, one or more base stations are coupled to a controller forming an access network that is coupled to one or more core networks. gNB 106, gNB 107 and gNB 108 are base stations in the wireless network, the serving area of which may or may not overlap with each other. As an example, user equipment (UE) 101 or mobile station 101 is in the serving area covered by gNB 106 and gNB 107. As an example, UE 101 or mobile station 101 is only in the service area of gNB 106 and connected with gNB 106. UE 102 or mobile station 102 is only in the service area of gNB 107 and connected with gNB 107. gNB 106 is connected with gNB 107 via Xn interface 121. gNB 106 is connected with gNB 108 via Xn interface 122. A 5G network entity 109 connects with gNB 106, 107, and 108 via NG connection 131, 132, and 133, respectively. Preferably, gNB 106 and gNB 107 provide the same MBMS services. The service continuity during handover is guaranteed when UE 101 moves from gNB 106 to gNB 107 and vice versa. The area covered by gNB 106 and 107 with the same MBMS services is a multi-cast service area for the MBMS services.

Figure 1 further illustrates simplified block diagrams of a base station and a mobile device/UE for multicast transmission. gNB 106 has an antenna 156, which transmits and receives radio signals. An RF transceiver circuit 153, coupled with the antenna 156, receives RF signals from antenna 156, converts them to baseband signals, and sends them to processor 152. RF transceiver 153 also converts received baseband signals from processor 152, converts them to RF signals, and sends out to antenna 156. Processor 152 processes the received baseband signals and invokes different functional modules to perform features in gNB 106. Memory 151 stores program instructions and data 154 to control the operations of gNB 106. gNB 106 also includes a set of control modules 155 that carry out functional tasks to communicate with mobile stations. These control modules can be implemented by circuits, software, firmware, or a combination of them.

Figure 1 also includes simplified block diagrams of a UE, such as UE 101. The UE has an antenna 165, which transmits and receives radio signals. An RF transceiver circuit 163, coupled with the antenna, receives RF signals from antenna 165, converts them to baseband signals, and sends them to processor 162. Preferably, the RF transceiver 163 may comprise two RF modules (not shown) which are used for different frequency bands transmitting and receiving. RF transceiver 163 also converts received baseband signals from processor 162, converts them to RF signals, and sends out to antenna 165. Processor 162 processes the received baseband signals and invokes different functional modules to perform features in UE 101. Memory 161 stores program instructions and data 164 to control the operations of UE 101. Antenna 165 sends uplink transmission and receives downlink transmissions to/from antenna 156 of gNB 106.

The UE also includes a set of control modules that carry out functional tasks. These control modules can be implemented by circuits, software, firmware, or a combination of them. A configuration module 191 configures an MRB for one or more multicast and broadcast services (MBSs) in a wireless network, wherein an MRB configuration enables feedback for the one or more MBSs. A joining module 192 initiates a join procedure to join an MBS session, wherein the MBS session is active. A reception module 193 receives one or more configuration values for packet data convergence protocol (PDCP) state variables from the wireless network, wherein the PDCP state variables control PDCP transceiving for the MBS session. A state variable module 194 configures PDCP state variables based on the received one or more configuration values. A PDCP processing module 195 stores one or more PDCP packet data units (PDUs) in a reception buffer when the one or more PDCP PDUs are received before receiving one or more configuration values for PDCP state variables from the wireless network.

Preferably, the UE further has an RRC state controller, an MBS controller, and a protocol stack controller. RRC state controller controls UE RRC state according to commands from the network and UE conditions. RRC supports the following states, RRC_IDLE, RRC_CONNECTED and RRC_INACTIVE. Preferably, UE can receive the multicast and broadcast services in RRC_IDLE/INACTIVE state. The UE applies the MRB establishment procedure to start receiving a session of a service it has an interest in. The UE applies the MRB release procedure to stop receiving a session. MBS controller controls to establish/add, reconfigure/modify and release/remove a MRB based on different sets of conditions for MRB establishment, reconfiguration, and release. A protocol stack controller manages to add, modify, or remove the protocol stack for the MRB. The protocol Stack includes the packet data convergence protocol (PDCP) layer 182, the radio link control (RLC) 183, the MAC layer 184 and the PHY layer 185. Preferably, the service data adaptation protocol (SDAP) layer 181 is optionally configured.

Preferably, the PDCP layer supports the functions of transfer of data, maintenance of PDCP sequence number (SN), header compression and decompression using the robust header compression (ROHC) protocol, ciphering and deciphering, integrity protection and integrity verification, timer based SDU discard, routing for split bearer, duplication, re-ordering, in-order delivery, out of order delivery and duplication discarding. The PDCP entity includes a reordering buffer 188 and a status reporter 189. Preferably, the receiving PDCP entity sends PDCP status report upon t-Reordering expiry. Preferably, the PDCP status reports triggers PDCP retransmission at the peer transmitting PDCP entity at the network side.

Preferably, the RLC layer 183 supports the functions of error correction through ARQ, segmentation and reassembly, re-segmentation, duplication detection, reestablishment, etc. Preferably, a new procedure for RLC reconfiguration is performed, which can reconfigure the RLC entity to associated to one or two logical channels. Preferably, the MAC layer 184 supports mapping between logical channels and transport channels, multiplexing, demultiplexing, HARQ, radio resource selection, and etc.

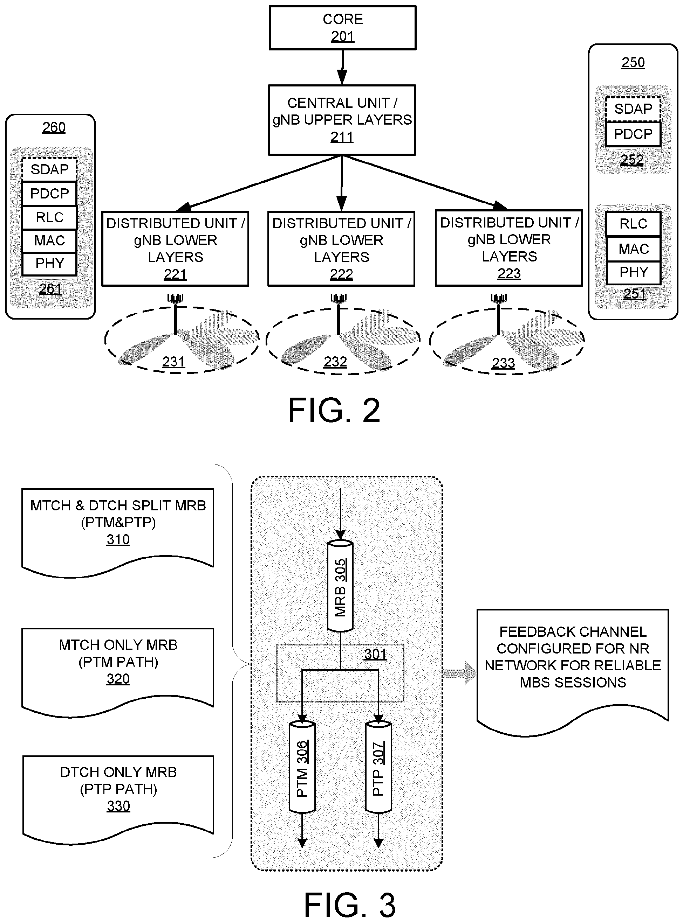

Figure 2 illustrates an exemplary NR wireless system with centralized upper layers of the NR radio interface stacks. Different protocol split options between central unit (CU) and distributed unit (DU) of gNB nodes may be possible. The functional split between the CU and DU of gNB nodes may depend on the transport layer. Low performance transport between the CU and DU of gNB nodes can enable the higher protocol layers of the NR radio stacks to be supported in the CU, since the higher protocol layers have lower performance requirements on the transport layer in terms of bandwidth, delay, synchronization, and jitter. Preferably, SDAP and PDCP layer are located in the CU, while RLC, MAC and PHY layers are located in the DU. A core unit 201 is connected with one central unit 211 with gNB upper layer 252. In one embodiment 250, gNB upper layer 252 includes the PDCP layer and optionally the SDAP layer. Central unit 211 connects with distributed units 221, 222, and 221. Distributed units 221, 222, and 223 each corresponds to a cell 231, 232, and 233, respectively. The DUs, such as 221, 222 and 223 includes gNB lower layers 251. Preferably, gNB lower layers 251 include the PHY, MAC and the RLC layers. In another embodiment 260, each gNB has the protocol stacks 261 including SDAP, PDCP, RLC, MAC and PHY layers.

Figure 3 illustrates exemplary MRB configuration in accordance with embodiments of the current invention. Multicast radio bearer 305 provides multicast service, which is carried by multicast traffic channel (MTCH) of a point to multipoint (PTM) 306, a dedicated traffic channel (DTCH) of a point to point(PTP) 307, or both MTCH 306 and DTCH 307 with a UE protocol stack 301. In one embodiment 320, the MRB is configured to be associated to a MTCH. In another embodiment 330, the MRB is configured to be associated to a DTCH. In yet another embodiment 310, the MRB is configured to be associated to a MTCH and a DTCH. In embodiment 310, the MRB is configured in PTM&PTP transmission mode. One or multiple MRBs are established corresponding to the multicast flows of a particular multicast session in order to support the multicast transmission in the downlink over the air. The multicast Radio Bearer (i.e., RB) can be subject to PTM and/or PTP transmission within a cell. In embodiment 320, the MRB is configured in PTM transmission mode. In embodiment 330, the MRB is configured in PTM mode. In embodiment 310, the MRB is configured in PTM&PTP transmission mode.

In certain systems, such as NR systems, NR multicast/broadcast is transmitted in the coverage of a cell. Preferably, MCCH provides the information of a list of NR multicast/broadcast services with ongoing sessions transmitted on MTCH(s). At physical layer, MTCH is scheduled by gNB in the search space of PDCCH with G-RNTI scrambled. UE decodes the MTCH data for a multicast session in the multicast PDSCH. In legacy system supporting MBMS/eMBMS, the radio bearer structure for multicast and broadcast transmission is modelled in an independent way from unicast transmission. Because of the unidirectional transmission for legacy MBMS/eMBMS service, RLC unacknowledged mode (UM) node is used for the transmission of MBS session. In this case there is no need to make the interaction between multicast and unicast for a particular UE which is in RRC CONNECTED state. For the NR network, with new services provided through MBS, reliable transmission is required. The traditional multicast transmission does not ensure successful reception for all UEs, unless very conservative link adaptations are implemented, which greatly degrades the resource efficiency. To support the reliable transmission for NR multicast service, a feedback channel in the uplink is needed for each UE receiving the service, which can be used by the receiving UE to feedback its reception status about the service to the network. Based on the feedback, the network may perform necessary retransmission to improve the transmission reliability. From uplink feedback perspective, the feedback channel may be used for L2 feedback (e.g., RLC Status Report and/or PDCP Status Report). In addition, the feedback channel may be used for HARQ feedback. Furthermore, the feedback should be a bidirectional channel between the UE and the network, with the assumption that the network may take that channel to perform needed packet retransmission. The said packet retransmission is L2 retransmission (e.g., RLC retransmission and/or PDCP retransmission). In addition, the feedback channel may be used for HARQ retransmission.

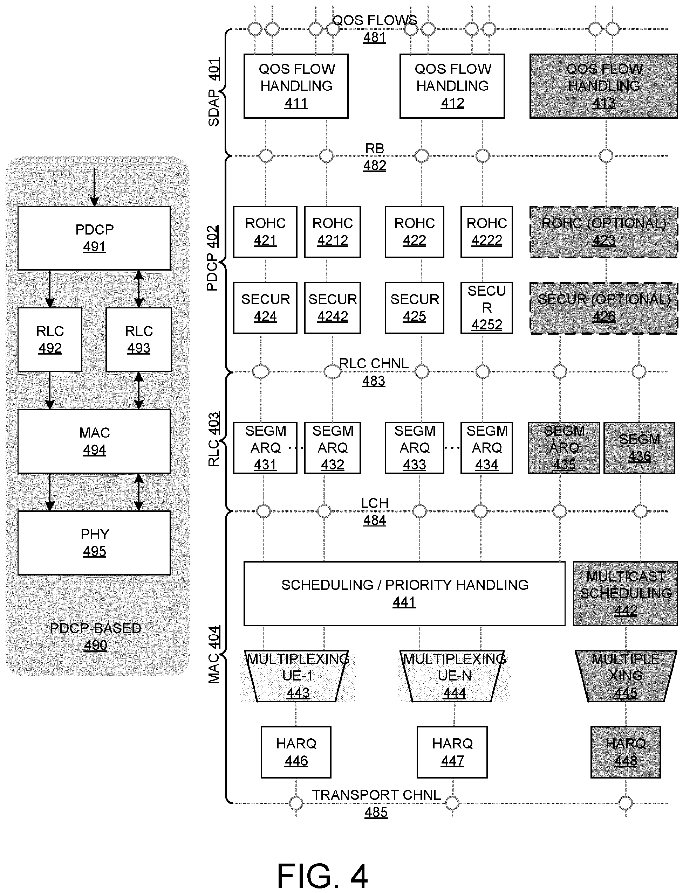

Figure 4 illustrates an exemplary protocol stack for a MRB configuration with PDCP-based retransmission. In the PDCP-based retransmission 490, there is one PDCP entity 491 per MRB. Two logical channels, i.e., MTCH and DTCH are associated to the PDCP entity. Each logical channel is corresponding to a RLC entity, RLC 492 corresponding to the MTCH and RLC 493 corresponding to the DTCH. From UE aspect, the PDCP status report to trigger PDCP retransmission is delivered to the RLC entity 493 corresponding to DTCH. From network aspect, the PDCP protocol data units (PDUs) subject to retransmission are delivered through DTCH. The MAC entity maps the logical channel MTCH to the transport channel 1 (e.g., MCH, DL-SCH) and maps the logical channel DTCH to the transport channel 2 (e.g., MCH, DL-SCH). UE monitors two independent transport channels via different radio network temporary identifiers (RNTIs). The ROHC function and security function are optional for multicast transmission. The RLC layer includes only segmentation and the ARQ function of RLC layer is moved to PDCP layer. RLC 492 and RLC 493 maps to MAC 494 and send the data packets to PHY 495.

A network entity, such as a base station/gNB, transmits MBS data packets with PTM link to a number N of UEs and retransmits MBS data packets based on feedbacks through associated PTP link with the PDCP-based protocol stack. An exemplary UE, correspondingly configured with PDCP-based protocol stack receives MBS data packets on the PTM RB from the bases station and sends feedback to the base station. The multicast is scheduled independently from PTP transmission. The protocol stack for both the base station and the UE includes SDAP layer 401, PDCP layer 402, RLC layer 403, and MAC layer 404. SDAP layer 401 handles QoS flows 481, including functions at the base station of QoS flow handling 411 for UE-1 and QoS flow handling 412 for UE-N, and functions at the UE of QoS flow handling 413 for the UE. The PDCP layer 402 includes ROHC functions and security functions. The ROHC function and security function are optional for multicast transmission. PDCP layer 402 includes base station functions of ROHC 421 and security 424 for UE-1 multicast, ROHC 4212 and security 4242 for UE-1 unicast, ROHC 422 and security 425 for UE-N multicast, ROHC 4222 and security 4252 for UE-N unicast, and functions at the UE of ROHC 423 and security 426. RBs 482 are handled in PDCP layer 402. The RLC layer 403 includes both segmentation and ARQ function at base Station of segmentation and ARQ 431 for UE-1 multicast, segmentation and ARQ 432 for UE-1 unicast, segmentation and ARQ 433 for UE-N multicast, segmentation and ARQ 434 for UE-N unicast, as well as UE functions of segmentation and ARQ 435 for the unicast channel of the UE, and segmentation and ARQ 436 for the multicast channel. RLC channels 483 are handled in RLC layer 403. MAC layer 404 includes functions of scheduling and priority handling 441 at the base station, multiplexing 443 and HARQ 446 for UE-1 at the base station, multiplexing 444 and HARQ 447 for UE-N at the base station; and functions for the UE of scheduling and priority handling 442 of the UE, multiplexing 445 of the UE and HARQ 448 of the UE. Logic channels 484 and transport channels 485 are handled at MAC layer 404.

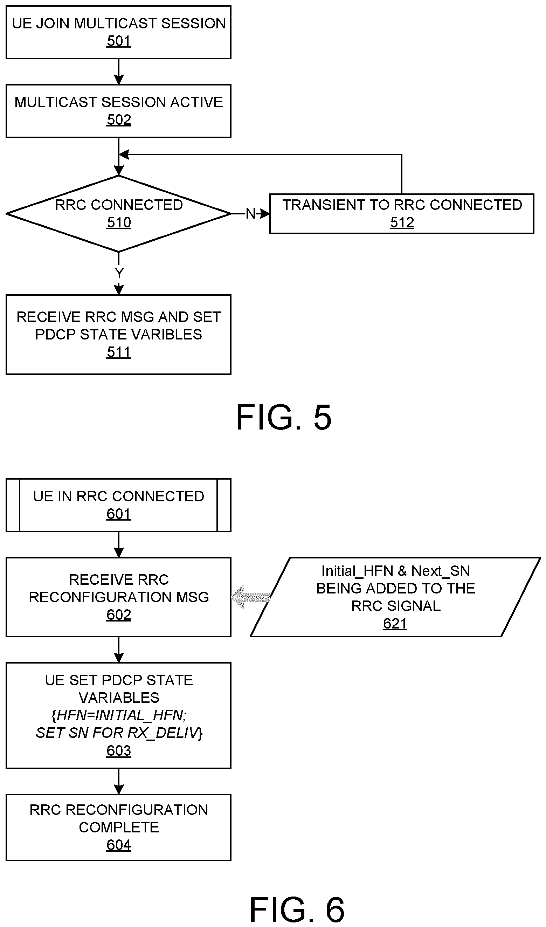

Figure 5 illustrates an exemplary flow diagram of conditions for UE RRC states when MBS sessions are active in accordance with embodiments of the current invention. The UE is configured with one or more MBS services. At step 501, the UE joins a multicast/MBS session. Preferably, a request is sent from the UE to join the MBS session. After UE joined multicast session, preferably, the UE joins an active MBS session, i.e., the MBS session is active at step 502 when the UE joins. In other scenarios, the MBS session is not active and when the MBS session activates, the UE will receive a session activation notification. In some scenarios, the UE transit to RRC IDLE / INACTIVE states for power saving when the MBS session was not active. In other scenarios, the UE may stay in RRC CONNECTED state for other receptions when the MBS session was not active. The RRC CONNECTED state UE may stay in the RRC CONNECTED state or transits to RRC IDLE / INACTIVE state if the MBS session is not active. When multicast session activates, UE receives session activation notification and detected that the MBS session is active at step 502. Upon detecting the MBS session is active, at step 510, the UE determines if the UE is in the RRC CONNECTED state. If step 510 determines no, the UE transits to RRC CONNECTED state at step 512. If step 510 determines yes, at step 511, the UE in the RRC CONNECTED state receives RRC signaling to set initial PDCP state variables.

Figure 6 illustrates an exemplary flow diagram of conditions for setting the PDCP state variables based on network information for multicast services in accordance with embodiments of the current invention. At step 601, the UE is in the RRC CONNECTED state. Preferably, the MBS session is activated. At step 602, the UE receives message from network for detailed RRC configuration. Preferably, the network message is an RRC message. Preferably, the RRC message is a RRCReconfiguration message, a RRCResume message, or a RRCSetup message. The wireless network indicates the SN of the first PDU will be transmitted to UE (e.g., *next_SN*) and corresponding HFN value (e.g., *initial_HFN*)*.* In one embodiment 621, the indicator is provided by RRC Reconfiguration message, with the initial _HFN and next_SN information added to the RRC message. Preferably, the indicator is provided by RRC Setup/Resume signal according to RRC states of UE (not shown). At step 603, the UE sets HFN to the value of the HFN indicated by the network, which is the initial_HFN in the RRC message; and set SN of RX_DELIV and/or RX_ NEXT to the SN of the first PDU will be transmitted by the network, which is the next_SN in the RRC message. After the UE applies the RRC configurations, at step 604, the UE transmits a RRC message, such as *RRCReconfigurationComplete* message to the wireless network.

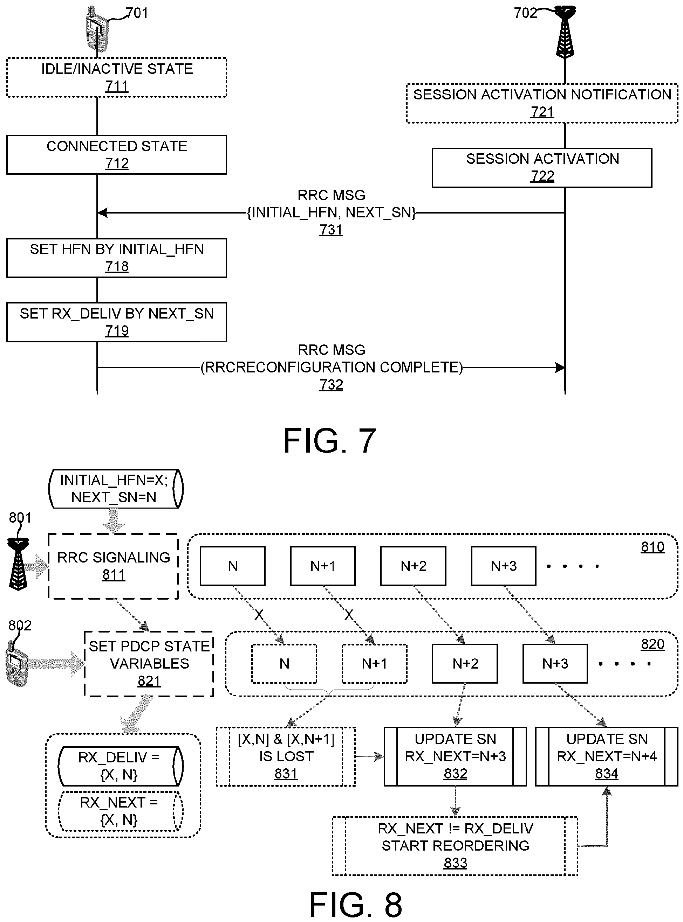

Figure 7 illustrates an exemplary message diagram of setting the PDCP state variables based on the received network information for multicast services in accordance with embodiments of the current invention. A UE 701 is configured with one or more MBSs in a wireless network with a gNB 702. Considering different scenarios before the UE receiving data packets from a configured MBS. In one scenario 711, UE 701 is in the RRC IDLE/INACTIVE state. In another scenario, the MBS session is not activated. At step 721, the network notifies to activate MBS session. Preferably, gNB 702 sends an MBS session activation notification to one or more UEs, including UE 701. Preferably, the MBS session activation notification is broadcasted. Alternatively or additionally preferably, the MBS session activation notification is unicasted to each UE. In some scenarios, the MBS session becomes activated when UE 701 is the RRC IDLE /INACTIVE state, while in other scenarios, UE 701 is in the RRC CONNECTED state. The MBS session becomes activated before or after UE 701 determines to join the session. Preferably, UE 701 is in RRC CONNECTED before session activate. UE 701 receives unicast services simultaneously. In this case, network will transmit RRC reconfiguration message without additional session activation notification. Preferably, UE is in RRC IDLE/INACTIVE state before session activate. The UE needs to monitor session activation notification. After network notify session activation, UE transits to RRC CONNECTED states to receive multicast service. In one scenario, at step 712, UE 712 enters RRC CONNECTED state. At step 722, the MBS session is activated.

When the MBS session is activated and UE 701 is in the RRC CONNECTED state, the UE receives from the network the HFN and SN values for the UE PDCP state variables for the active MBS session. Preferably, at step 731, UE 701 receives RRC signaling for detailed RRC configuration. The RRC signaling from the network includes one or more configuration values for the UE PDCP state variables of the MBS session, including an HFN value, such as the initial_HFN, and an SN value, such as the next_SN. Preferably, RRC Reconfiguration message is used from network with the indicator of HFN and the SN of the next PDCP PDU to be transmitted. At step 713, UE 701 sets HFN to initial _HFN included in the RRC message from the network. At step 718, UE 701 sets HFN to initial _HFN. At step 719, UE 701 sets SN parts of RX_DELIV to next_SN. Optionally, UE 701 sets SN parts of RX_NEXT to next_SN. After finishing RRC reconfiguration including PDCP state variables initialization, at step 732, UE 701 submits *RRCReconfigurationComplete* message to the network.

Figure 8 illustrates an exemplary diagram for setting the UE PDCP state variables indicated by the network in accordance with embodiments of the current invention. A UE 802 is configured with one or more MBSs in a wireless network with a gNB 801. When UE 802 establish an MRB, initial value of PDCP state variables will be transmitted in RRC signaling. At step 811, gNB 801 sends an RRC message/signal with configuration values for PDCP state variables, including an HFN value and an SN value. At step 821, UE 802 sets PDCP state variables based on the configuration values received from the RRC message. Assuming that the value of the initial HFN indicated by the network is X and the SN of the next PDCP PDU to be transmitted is N. The network sends data packets 810 with SN of N, N+1, N+2, N+3, and etc.

Preferably, UE may receive subsequent data PDUs earlier than RRC signaling (not shown). The UE receives MBS data packets 820 and processes the received packets based on the network configuration values for the UE PDCP state variables. Preferably, UE have to receive MBS data PDUs after receiving RRC signaling. The UE stores one or more PDCP PDUs in reception buffer when the one or more PDCP PDUs are received before receiving one or more configuration values for PDCP state variables from the wireless network. Subsequently, the UE processes the stored PDCP PDUs when one or more configuration values from the wireless network are received and applied. Upon receiving the RRC signal with the configuration values for the UE PDCP state variables, the UE sets HFN=X, SN parts of RX_DELIV=N. As illustrated, SN part of RX_NEXT will be updated according to the SN of received PDUs. At step 831, if some PDUs is lost (assume[X,N] and [X,N+1] is lost), UE will update RX_NEXT to the SN of the next received PDU +1. At step 832, the RX_NEXT is updated to N+3. At step 833, upon determining that RX_NEXT is not equal to RX_DELIV, the UE start reordering when processing the stored PDCP PDUs. At step 834, the RX_NEXT is update to N+4. In subsequent reception, if PDCP PDU with COUNT [X,N] is successfully received, SN parts of RX_NEXT and RX DELIV will be updated to N+1.

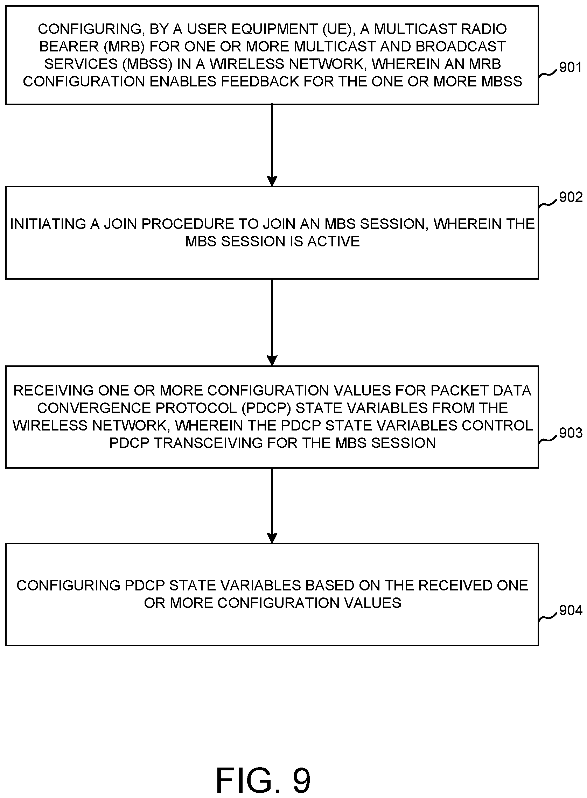

Figure 9 illustrates an exemplary flow chart for the UE receiving one or more configuration values for UE PDCP state variables for an MBS session from the network and setting the PDCP state variables in accordance with embodiments of the current invention. At step 901, the UE configures an MRB for one or more MBSs in a wireless network, wherein an MRB configuration enables feedback for the one or more MBSs. At step 902, the UE initiates a join procedure to join an MBS session, wherein the MBS session is active. At step 903, the UE receives one or more configuration values for PDCP state variables from the wireless network, wherein the PDCP state variables control PDCP transceiving for the MBS session. At step 904, the UE configures PDCP state variables based on the received one or more configuration values.

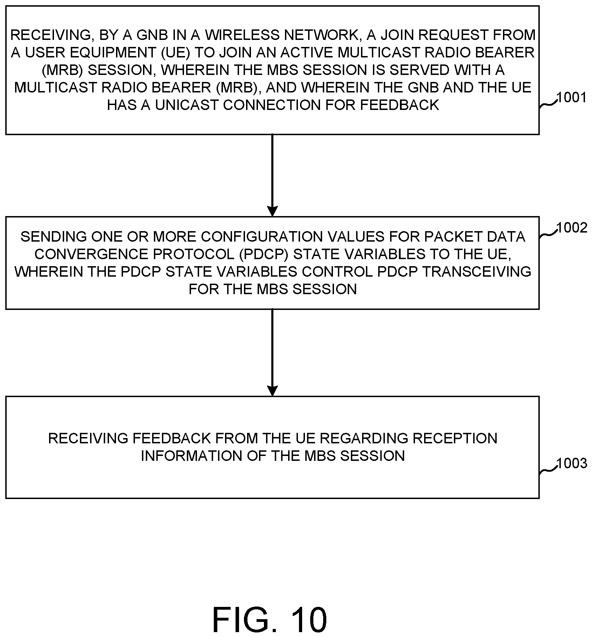

Figure 10 illustrates an exemplary flow chart for the base station sending one or more configuration values for UE PDCP state variables for an MBS session in accordance with embodiments of the current invention. At step 1001, the base station/gNB receives a join request from a UE to join an active MBS session, wherein the MBS session is served with an MRB, and wherein the base station/gNB and the UE has a unicast connection for feedback. At step 1002, the base station/gNB sends one or more configuration values for PDCP state variables to the UE, wherein the PDCP state variables control PDCP transceiving for the MBS session. At step 1003, the base station/gNB receives feedback from the UE regarding reception information of the MBS session.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method comprising:
establishing, by a user equipment, in the following also referred to as UE, a multicast radio bearer, in the following also referred to as MRB, with a base station in a wireless network for one or more multicast and broadcast services, in the following also referred to as MBSs, wherein an MRB configuration enables feedback for the one or more MBSs (901) and wherein the base station and the UE has a unicast connection for feedback;
initiating, by the UE, a join procedure to join an MBS session, wherein the MBS session is active (902);
receiving, by the UE, one or more configuration values for packet data convergence protocol, in the following also referred to as PDCP, state variables from the base station in the wireless network after the UE initiates the join procedure, wherein the PDCP state variables control PDCP transceiving for the MBS session (731; 903);
configuring, by the UE, PDCP state variables based on the received one or more configuration values (718, 719; 904); and
transmitting, by the UE, feedback to the base station regarding reception of information of the MBS session.

2. The method of claim 1, wherein the one or more configuration values for the PDCP state variables are received from a radio resource control, in the following also referred to as RRC, message (731), wherein the RRC message is a RRCReconfiguration message, a RRCResume message, or a RRCSetup message.

3. The method of claim 1 or 2, wherein the one or more configuration values include a hyper frame number, in the following also referred to as HFN, and a sequence number, in the following also referred to as SN.

4. The method of any one of claims 1 to 3, wherein the configuring of the PDCP state variable involves initializing the RX_DELIV value (719) based on the configuration value of HFN and SN received from the wireless network.

5. The method of any one of claims 1 to 4, wherein the configuring of the PDCP state variable involves setting the RX_NEXT value based on the configuration value of HFN and SN received from the wireless network.

6. The method of any one of claims 1 to 5, further comprising:
storing one or more PDCP packet data units, in the following also referred to as PDUs, in a reception buffer when the one or more PDCP PDUs are received before receiving one or more configuration values for PDCP state variables from the wireless network; and
processing the stored one or more PDCP PDUs when one or more configuration values from the wireless network are received and applied.

7. A method comprising:
receiving, by a base station in a wireless network, a join request from a user equipment, in the following also referred to as UE, to join an active multicast broadcast service, in the following also referred to as MBS, session, wherein the MBS session is served with a multicast radio bearer, in the following also referred to as MRB, and wherein the base station and the UE has a unicast connection for feedback (1001);
sending, by the base station, one or more configuration values for packet data convergence protocol, in the following also referred to as PDCP, state variables to the UE after reception of the join request, wherein the PDCP state variables control PDCP transceiving for the MBS session (731; 1002); and
receiving, by the base station, feedback from the UE regarding reception information of the MBS session (732; 1003).

8. The method of claim 7, wherein the one or more configuration values for the PDCP state variables are sent with a radio resource control, in the following also referred to as RRC, message (731), wherein the RRC message is a RRCReconfiguration message, a RRCResume message, or a RRCSetup message.

9. The method of claim 7 or 8, wherein the one or more configuration values include a hyper frame number, in the following also referred to as HFN, and a sequence number, in the following also referred to as SN.

10. A user equipment, in the following also referred to as UE, (101), comprising:
a transceiver (163) that transmits and receives radio frequency, in the following also referred to as RF, signal in a wireless network (100);
a configuration module (191) that establishes a multicast radio bearer, in the following also referred to as MRB, with a base station (106) in a wireless network (100) for one or more multicast and broadcast services, in the following also referred to as MBSs, wherein an MRB configuration enables feedback for the one or more MBSs and wherein the base station and the UE has a unicast connection for feedback;
a joining module (192) that initiates a join procedure to join an MBS session, wherein the MBS session is active;
a reception module (193) that receives one or more configuration values for packet data convergence protocol, in the following also referred to as PDCP, state variables from the base station (106) in the wireless network (100) after the UE initiating the join procedure, wherein the PDCP state variables control PDCP transceiving for the MBS session; and
a state variable module (194) that configures PDCP state variables based on the received one or more configuration values,
wherein the transceiver further transmits feedback to the base station regarding reception of information of the MBS session.

11. The UE (101) of claim 10, wherein the one or more configuration values for the PDCP state variables are received from a radio resource control, in the following also referred to as RRC, message, wherein the RRC message is a RRCReconfiguration message, a RRCResume message, or a RRCSetup message.

12. The UE (101) of claim 10 or 11, wherein the one or more configuration values include a hyper frame number, in the following also referred to as HFN, and a sequence number, in the following also referred to as SN.

13. The UE (101) of any one of claims 10 to 12, wherein the configuring of the PDCP state variable involves initializing the RX_DELIV value based on the configuration value of HFN and SN received from the wireless network.

14. The UE (101) of any one of claims 10 to 13, wherein the configuring of the PDCP state variable involves setting the RX_NEXT value based on the configuration value of HFN and SN received from the wireless network (100).

15. The UE (101) of any one of claims 10 to 14, further comprising:
a PDCP processing module (195) that stores one or more PDCP packet data units, in the following also referred to as PDUs, in a reception buffer when the one or more PDCP PDUs are received before receiving one or more configuration values for PDCP state variables from the wireless network (100), and processes the stored PDCP PDUs when one or more configuration values from the wireless network (100) are received and applied.

## Patentansprüche

1. Verfahren, umfassend:
Einrichten, durch ein Benutzergerät, im Folgenden auch als UE bezeichnet, eines Multicast-Funkträgers, im Folgenden auch als MRB bezeichnet, mit einer Basisstation in einem drahtlosen Netzwerk für einen oder mehrere Multicast- und Broadcast-Dienste, im Folgenden auch als MBS bezeichnet, wobei eine MRB-Konfiguration Feedback für den einen oder die mehreren MBS (901) ermöglicht und wobei die Basisstation und das UE eine Unicast-Verbindung für Feedback aufweisen;
Initiieren, durch das UE, einer Beitrittsprozedur zum Beitritt zu einer MBS-Sitzung, wobei die MBS-Sitzung aktiv ist (902);
Empfangen, durch das UE, eines oder mehrerer Konfigurationswerte für Paketdatenkonvergenzprotokoll-, im Folgenden auch als PDCP bezeichnet, Zustandsvariablen von der Basisstation in dem drahtlosen Netzwerk nachdem das UE die Beitrittsprozedur initiiert, wobei die PDCP-Zustandsvariablen PDCP-Sendeempfang für die MBS-Sitzung steuern (731; 903);
Konfigurieren, durch das UE, von PDCP-Zustandsvariablen basierend auf dem einen oder den mehreren empfangenen Konfigurationswerten (718, 719; 904); und
Übertragen, durch das UE, von Feedback an die Basisstation bezüglich des Empfangs von Informationen der MBS-Sitzung.

2. Verfahren nach Anspruch 1, wobei der eine oder die mehreren Konfigurationswerte für die PDCP-Zustandsvariablen von einer Funkressourcensteuerungs-, im Folgenden auch als RRC bezeichnet, Nachricht (731) empfangen werden, wobei die RRC-Nachricht eine RRC-Reconfiguration-Nachricht, eine RRC-Resume-Nachricht oder eine RRC-Setup-Nachricht ist.

3. Verfahren nach Anspruch 1 oder 2, wobei der eine oder die mehreren Konfigurationswerte eine Hyperrahmennummer, im Folgenden auch als HFN bezeichnet, und eine Sequenznummer, im Folgenden auch als SN bezeichnet, beinhalten.

4. Verfahren nach einem der Ansprüche 1 bis 3, wobei das Konfigurieren der PDCP-Zustandsvariablen ein Initialisieren des RX_DELIV-Werts (719) basierend auf dem Konfigurationswert von HFN und SN, der von dem drahtlosen Netzwerk empfangen wird, beinhaltet.

5. Verfahren nach einem der Ansprüche 1 bis 4, wobei das Konfigurieren der PDCP-Zustandsvariablen ein Einstellen des RX_NEXT-Werts basierend auf dem Konfigurationswert von HFN und SN, der von dem drahtlosen Netzwerk empfangen wird, beinhaltet.

6. Verfahren nach einem der Ansprüche 1 bis 5, ferner umfassend:
Speichern einer oder mehrerer PDCP-Paketdateneinheiten, im Folgenden auch als PDUs bezeichnet, in einem Empfangspuffer, wenn die eine oder die mehreren PDCP-PDUs empfangen werden, bevor ein oder mehrere Konfigurationswerte für PDCP-Zustandsvariablen von dem drahtlosen Netzwerk empfangen werden; und
Verarbeiten der gespeicherten einen oder mehreren PDCP-PDUs, wenn ein oder mehrere Konfigurationswerte von dem drahtlosen Netzwerk empfangen und angewendet werden.

7. Verfahren, umfassend:
Empfangen, durch eine Basisstation in einem drahtlosen Netzwerk, einer Beitrittsanforderung von einem Benutzergerät, im Folgenden auch als UE bezeichnet, um einer aktiven Multicast-Broadcast-Dienst-, im Folgenden auch als MBS bezeichnet, Sitzung beizutreten, wobei die MBS-Sitzung mit einem Multicast-Funkträger, im Folgenden auch als MRB bezeichnet, bedient wird und wobei die Basisstation und das UE eine Unicast-Verbindung für Feedback aufweisen (1001);
Senden, durch die Basisstation, eines oder mehrerer Konfigurationswerte für Paketdatenkonvergenzprotokoll-, im Folgenden auch als PDCP bezeichnet, Zustandsvariablen an das UE nach Empfang der Beitrittsanforderung, wobei die PDCP-Zustandsvariablen PDCP-Sendeempfang für die MBS-Sitzung steuern (731; 1002); und
Empfangen, durch die Basisstation, von Feedback von dem UE bezüglich Empfangsinformationen der MBS-Sitzung (732; 1003).

8. Verfahren nach Anspruch 7, wobei der eine oder die mehreren Konfigurationswerte für die PDCP-Zustandsvariablen mit einer Funkressourcensteuerungs-, im Folgenden auch als RRC bezeichnet, Nachricht (731) gesendet werden, wobei die RRC-Nachricht eine RRC-Reconfiguration-Nachricht, eine RRC-Resume-Nachricht oder eine RRC-Setup-Nachricht ist.

9. Verfahren nach Anspruch 7 oder 8, wobei der eine oder die mehreren Konfigurationswerte eine Hyperrahmennummer, im Folgenden auch als HFN bezeichnet, und eine Sequenznummer, im Folgenden auch als SN bezeichnet, beinhalten.

10. Benutzergerät, im Folgenden auch als UE bezeichnet, (101), umfassend:
einen Sendeempfänger (163), der ein Funkfrequenz-, im Folgenden auch als RF bezeichnet, Signal in einem drahtlosen Netzwerk (100) überträgt und empfängt;
ein Konfigurationsmodul (191), das einen Multicast-Funkträger, im Folgenden auch als MRB bezeichnet, mit einer Basisstation (106) in einem drahtlosen Netzwerk (100) für einen oder mehrere Multicast- und Broadcast-Dienste, im Folgenden auch als MBS bezeichnet, einrichtet, wobei eine MRB-Konfiguration Feedback für den einen oder die mehreren MBS ermöglicht und wobei die Basisstation und das UE eine Unicast-Verbindung für Feedback aufweisen;
ein Beitrittsmodul (192), das eine Beitrittsprozedur zum Beitritt zu einer MBS-Sitzung initiiert, wobei die MBS-Sitzung aktiv ist;
ein Empfangsmodul (193), das einen oder mehrere Konfigurationswerte für Paketdatenkonvergenzprotokoll-, im Folgenden auch als PDCP bezeichnet, Zustandsvariablen von der Basisstation (106) in dem drahtlosen Netzwerk (100) empfängt, nachdem das UE die Beitrittsprozedur initiiert, wobei die PDCP-Zustandsvariablen PDCP-Sendeempfang für die MBS-Sitzung steuern; und
ein Zustandsvariablenmodul (194), das PDCP-Zustandsvariablen basierend auf dem einen oder den mehreren empfangenen Konfigurationswerten konfiguriert,
wobei der Sendeempfänger ferner Feedback an die Basisstation bezüglich des Empfangs von Informationen der MBS-Sitzung überträgt.

11. UE (101) nach Anspruch 10, wobei der eine oder die mehreren Konfigurationswerte für die PDCP-Zustandsvariablen von einer Funkressourcensteuerungs-, im Folgenden auch als RRC bezeichnet, Nachricht empfangen werden, wobei die RRC-Nachricht eine RRC-Reconfiguration-Nachricht, eine RRC-Resume-Nachricht oder eine RRC-Setup-Nachricht ist.

12. UE (101) nach Anspruch 10 oder 11, wobei der eine oder die mehreren Konfigurationswerte eine Hyperrahmennummer, im Folgenden auch als HFN bezeichnet, und eine Sequenznummer, im Folgenden auch als SN bezeichnet, beinhalten.

13. UE (101) nach einem der Ansprüche 10 bis 12, wobei das Konfigurieren der PDCP-Zustandsvariablen ein Initialisieren des RX_DELIV-Werts basierend auf dem Konfigurationswert von HFN und SN, der von dem drahtlosen Netzwerk empfangen wird, beinhaltet.

14. UE (101) nach einem der Ansprüche 10 bis 13, wobei das Konfigurieren der PDCP-Zustandsvariablen ein Einstellen des RX_NEXT-Werts basierend auf dem Konfigurationswert von HFN und SN, der von dem drahtlosen Netzwerk (100) empfangen wird, beinhaltet.

15. UE (101) nach einem der Ansprüche 10 bis 14, ferner umfassend:
ein PDCP-Verarbeitungsmodul (195), das eine oder mehrere PDCP-Paketdateneinheiten, im Folgenden auch als PDUs bezeichnet, in einem Empfangspuffer speichert, wenn die eine oder die mehreren PDCP-PDUs empfangen werden, bevor ein oder mehrere Konfigurationswerte für PDCP-Zustandsvariablen von dem drahtlosen Netzwerk (100) empfangen werden, und die gespeicherten PDCP-PDUs verarbeitet, wenn ein oder mehrere Konfigurationswerte von dem drahtlosen Netzwerk (100) empfangen und angewendet werden.

## Revendications

1. Procédé comprenant :
l'établissement, par un équipement utilisateur, ci-après également appelé UE, d'un support radio de multidiffusion, ci-après également appelé MRB, avec une station de base dans un réseau sans fil pour un ou plusieurs services de multidiffusion et de diffusion, ci-après également appelés MBS, dans lequel une configuration MRB permet une rétroaction pour les un ou plusieurs MBS (901) et dans lequel la station de base et l'UE ont une connexion de monodiffusion pour une rétroaction ;
l'initiation, par l'UE, d'une procédure de jointure pour rejoindre à une session MBS, dans lequel la session MBS est active (902) ;
la réception, par l'UE, d'une ou plusieurs valeurs de configuration pour des variables d'état de protocole de convergence de données par paquets, ci-après également appelé PDCP, à partir de la station de base dans le réseau sans fil après que l'UE a initié la procédure de jointure, dans lequel les variables d'état PDCP commandent l'émission-réception PDCP pour la session MBS (731 ; 903) ;
la configuration, par l'UE, de variables d'état PDCP sur la base des une ou plusieurs valeurs de configuration reçues (718, 719 ; 904) ; et
la transmission, par l'UE, d'une rétroaction à la station de base concernant la réception d'informations de la session MBS.

2. Procédé selon la revendication 1, dans lequel les une ou plusieurs valeurs de configuration pour les variables d'état PDCP sont reçues à partir d'un message de commande de ressource radio, ci-après également appelé RRC, (731), dans lequel le message RRC est un message RRCReconfiguration, un message RRCResume, ou un message RRCSetup.

3. Procédé selon la revendication 1 ou 2, dans lequel les une ou plusieurs valeurs de configuration incluent un numéro d'hyper-trame, ci-après également appelé HFN, et un numéro de séquence, ci-après également appelé SN.

4. Procédé selon l'une quelconque des revendications 1 à 3, dans lequel la configuration de la variable d'état PDCP implique l'initialisation de la valeur RX_DELIV (719) sur la base de la valeur de configuration de HFN et SN reçue à partir du réseau sans fil.

5. Procédé selon l'une quelconque des revendications 1 à 4, dans lequel la configuration de la variable d'état PDCP implique le réglage de la valeur RX_NEXT sur la base de la valeur de configuration de HFN et SN reçue à partir du réseau sans fil.

6. Procédé selon l'une quelconque des revendications 1 à 5, comprenant en outre :
le stockage d'une ou plusieurs unités de données par paquets, ci-après également appelées PDU, PDCP dans un tampon de réception lorsque les une ou plusieurs PDU PDCP sont reçues avant la réception d'une ou plusieurs valeurs de configuration pour des variables d'état PDCP à partir du réseau sans fil ; et
le traitement des une ou plusieurs PDU PDCP stockées lorsqu'une ou plusieurs valeurs de configuration à partir du réseau sans fil sont reçues et appliquées.

7. Procédé comprenant :
la réception, par une station de base dans un réseau sans fil, d'une demande d'adhésion à partir d'un équipement utilisateur, ci-après également appelé UE, pour rejoindre à une session de service de diffusion de multidiffusion, ci-après également appelée MBS, active dans lequel la session MBS est desservie avec un support radio de multidiffusion, ci-après également appelé MRB, et dans lequel la station de base et l'UE ont une connexion de monodiffusion pour une rétroaction (1001) ;
l'envoi, par la station de base, d'une ou plusieurs valeurs de configuration pour des variables d'état de protocole de convergence de données par paquets, ci-après également appelé PDCP, à l'UE après la réception de la demande de jointure, dans lequel les variables d'état PDCP commandent l'émission-réception PDCP pour la session MBS (731 ; 1002) ; et
la réception, par la station de base, d'une rétroaction à partir de l'UE concernant des informations de réception de la session MBS (732 ; 1003).

8. Procédé selon la revendication 7, dans lequel les une ou plusieurs valeurs de configuration pour les variables d'état PDCP sont envoyées avec un message de commande de ressource radio, ci-après également appelé RRC, (731), dans lequel le 2message RRC est un message RRCReconfiguration, un message RRCResume, ou un message RRCSetup.

9. Procédé selon la revendication 7 ou 8, dans lequel les une ou plusieurs valeurs de configuration incluent un numéro d'hyper-trame, ci-après également appelé HFN, et un numéro de séquence, ci-après également appelé SN.

10. Équipement utilisateur, ci-après également appelé UE, (101), comprenant :
un émetteur-récepteur (163) qui transmet et reçoit un signal de fréquence radio, ci-après également appelé RF, dans un réseau sans fil (100) ;
un module de configuration (191) qui établit un support radio de multidiffusion, ci-après également appelé MRB, avec une station de base (106) dans un réseau sans fil (100) pour un ou plusieurs services de multidiffusion et de diffusion, ci-après également appelés MBS, dans lequel une configuration MRB permet une rétroaction pour les un ou plusieurs MBS et dans lequel la station de base et l'UE ont une connexion de monodiffusion pour une rétroaction ;
un module de jointure (192) qui initie une procédure de jointure pour rejoindre à une session MBS, dans lequel la session MBS est active ;
un module de réception (193) qui reçoit une ou plusieurs valeurs de configuration pour des variables d'état de protocole de convergence de données par paquets, ci-après également appelé PDCP, à partir de la station de base (106) dans le réseau sans fil (100) après que l'UE a initié la procédure de jointure, dans lequel les variables d'état PDCP commandent l'émission-réception PDCP pour la session MBS ; et
un module de variable d'état (194) qui configure des variables d'état PDCP sur la base des une ou plusieurs valeurs de configuration reçues,
dans lequel l'émetteur-récepteur transmet en outre une rétroaction à la station de base concernant la réception d'informations de la session MBS.

11. UE (101) selon la revendication 10, dans lequel les une ou plusieurs valeurs de configuration pour les variables d'état PDCP sont reçues à partir d'un message de commande de ressource radio, ci-après également appelé RRC, dans lequel le message RRC est un message RRCReconfiguration, un message RRCResume, ou un message RRCSetup.

12. UE (101) selon la revendication 10 ou 11, dans lequel les une ou plusieurs valeurs de configuration incluent un numéro d'hyper-trame, ci-après également appelé HFN, et un numéro de séquence, ci-après également appelé SN.

13. UE (101) selon l'une quelconque des revendications 10 à 12, dans lequel la configuration de la variable d'état PDCP implique l'initialisation de la valeur RX_DELIV sur la base de la valeur de configuration de HFN et SN reçue à partir du réseau sans fil.

14. UE (101) selon l'une quelconque des revendications 10 à 13, dans lequel la configuration de la variable d'état PDCP implique le réglage de la valeur RX_NEXT sur la base de la valeur de configuration de HFN et SN reçue à partir du réseau sans fil (100).

15. UE (101) selon l'une quelconque des revendications 10 à 14, comprenant en outre :
un module de traitement PDCP (195) qui stocke une ou plusieurs unités de données par paquets, ci-après également appelées PDU, PDCP dans un tampon de réception lorsque les une ou plusieurs PDU PDCP sont reçues avant la réception d'une ou plusieurs valeurs de configuration pour des variables d'état PDCP à partir du réseau sans fil (100), et traite les PDU PDCP stockées lorsqu'une ou plusieurs valeurs de configuration à partir du réseau sans fil (100) sont reçues et appliquées.
